# EUROPÄISCHE PATENTSCHRIFT

(11) **EP 3 555 208 B1**
(45) Veröffentlichungstag und Bekanntmachung des Hinweises auf die Patenterteilung: **05.10.2022**
(21) Anmeldenummer: 17811530.9
(22) Anmeldetag: 04.12.2017
(51) Int. Cl.: C08L 23/22, C08L 23/28, C08L 9/02

(54) **KAUTSCHUKMISCHUNG**
RUBBER MIXTURE
MÉLANGE DE CAOUTCHOUC

(30) Priorität: 16.12.2016 DE 102016225299
(43) Veröffentlichungstag der Anmeldung: 23.10.2019
(73) Patentinhaber: ContiTech Schlauch GmbH, 30165 Hannover (DE)
(72) Erfinder: ONKEN, Kristian, 34131 Kassel (DE); STORRE, Jens, 37176 Nörten-Hardenberg (DE); SCHOBERT, Klaus, 31552 Nienburg (DE); BEHRENS, Henrik, 30629 Hannover (DE); PRÜSS, Corinna, 30419 Hannover (DE)
(74) Vertreter: Continental Corporation
(86) Internationale Anmeldenummer: PCT/EP2017/081318
(87) Internationale Veröffentlichungsnummer: WO 2018/108602

(56) Entgegenhaltungen:
- KR-A- 20090 131 006
- US-A- 5 771 939
- US-B1- 6 467 509

## Beschreibung

Die Erfindung betrifft eine Kautschukmischung, die insbesondere für den Einsatz im Trinkwasser- und Lebensmittelbereich geeignet ist.

Die meisten klassischen Vernetzungschemikalien wie z.B. Schwefelbeschleuniger oder Peroxide erzeugen während der Vulkanisation Zersetzungsprodukte, die im Elastomerprodukt nicht gewünscht sind und häufig negative organoleptische Eigenschaften verursachen. Zudem sind die meisten Spaltprodukte derzeit noch nicht vollständig toxikologisch untersucht bzw. bewertet.

Diese Bedenken hat das Deutsche Umweltbundesamt (UBA) dazu veranlasst, die Verwendung der klassischen Vernetzungschemikalien in der neuen Elastomerleitlinie (deutsche Regelung für Elastomere in Kontakt mit Trinkwasser) nach dem 31.12.2021 zu verbieten, sofern die Unbedenklichkeit der Substanzen nicht durch umfangreiche toxikologische Untersuchungen nachgewiesen wird.

Daher werden alternative Vernetzungschemikalien gesucht, die bei der Vulkanisation keine Spaltprodukte erzeugen und somit keine geruchliche und geschmackliche Beeinträchtigung verursachen können. Zudem sollten sie, im Sinne der Elastomerleitlinie, auch nach 2021 zugelassen sein.

Aus dem Stand der Technik ist bekannt, dass Harze, bevorzugt Butylphenol-FormaldehydHarze, als Vernetzungschemikalie für bestimmte Elastomere verwendet werden können.

Der Vorteil dieser Art der Vernetzung liegt in dem vollständigen Einbau der Vernetzungschemikalie in die Polymerketten, wodurch keine Beschleuniger-Spaltprodukte entstehen. Die häufig mit den Spaltprodukten einhergehenden negativen organoleptischen Eigenschaften und potentielle Migration der Spaltprodukten in das Medium, z.B. Trinkwasser, sind somit verhindert.

Bereits länger bekannt ist die Harzvernetzung im Bereich der Bladder-Herstellung für Autoreifen, bei der bevorzugt Butylkautschuk oder halogenierter Butylkautschuk (CIIR und BIIR) verwendet wird, siehe bspw. EP1016691A1.

In EP2871212A1 ist beschrieben, dass EPDM-Kautschuk, IIR-Kautschuk, CIIR-Kautschuk, BIIR-Kautschuk oder eine Mischung hiervon mit 3 bis 10 phr Butylphenol-Formaldehyd-Harz und einem Aktivierungssytem bestehend aus 1 bis 8 phr ZnO, 2 bis 6 phr einer C₆₋₂₄-Carbonsäure und einem chloriertem Polymer, wie CIIR, CPE, chloriertes Polyisopren oder chlorierter NR, vernetzt werden kann. Eine derartige Zusammensetzung zeichnet sich durch einen optimierten Druckverformungsrest (DVR) aus, so dass das Elastomer als Dichtungsring im Trinkwasserbereich eingesetzt werden kann.

Aktivierte Zeolithe und / oder Metallhalogenide können hierbei die Harz-Vernetzungsreaktion unterstützen, siehe bspw. EP2441798A1.

Um eine derartige Mischung nicht nur im Trinkwasserbereich, sondern auch im Lebensmittelbereich anwenden zu können, wäre es wünschenswert, die physikalische Beständigkeit der Kautschukmischung insbesondere hinsichtlich der in vielen Lebensmitteln vorhandenen Fette und Öle weiter zu verbessern. Zudem sollte die Beständigkeit gegenüber äußeren Umwelteinflüssen (z.B. UV, Ozon) verbessert werden, um eine verlängerte Alterungsbeständigkeit des Kautschuks zu erzielen.

Die Aufgabe der vorliegenden Erfindung besteht somit darin, eine Kautschukmischung bereitzustellen, die sich mit wenigstens einem para-tert.-Butylphenolformaldehydharz gut vernetzen lässt und die gleichzeitig eine gute Beständigkeit gegen Fette und / oder Öle besitzt und eine verbesserte Resistenz gegenüber äußeren Umwelteinflüssen aufweist.

Gelöst wird diese Aufgabe dadurch, dass die Kautschukmischung wenigstens einen Kautschuk und wenigstens ein para-tert.-Butylphenolformaldehydharz als Vernetzungsmittel und Polyvinylchlorid enthält. Überraschenderweise hat sich gezeigt, dass eine gute Fett- und / oder Ölbeständigkeit in Kombination mit einer verbesserten Alterungsbeständigkeit erzielt wird, wenn die Kautschukmischung zusätzlich zu dem vorhandenen Kautschuk noch Polyvinylchlorid (PVC) enthält.

Der Kautschuk ist bevorzugt ausgewählt aus der Gruppe bestehend aus Ethylen-Propylen-Mischpolymerisat (EPM) und Ethylen-Propylen-Dien-Mischpolymerisat (EPDM) und Nitrilkautschuk (NBR) und (teil)hydrierter Nitrilkautschuk (HNBR) und Naturkautschuk (NR) und Styrol-Butadien-Kautschuk (SBR) und lösungspolymerisiertem Styrol-Butadien-Kautschuk (SSBR) und emulsionspolymerisiertem Styrol-Butadien-Kautschuk (ESBR) und Isopren-Kautschuk (IR) und Butylkautschuk (IIR) und Butadien-Kautschuk (BR) und Ethylen-Vinylacetat-Kautschuk (EVA) und Silikonkautschuk (MQ, VMQ, PVMQ, FVMQ) und Poyurethan (PU) und Polynorbenkautschuk (PNR) und Trans-Polyoctenamer-Kautschuk (TOR) und Polyester-Urethan-Kautschuk (AU) und Polyurethan-Kautschuk (EU).

Die genannten Kautschuke können hierbei alleine oder in einer Kombination aus wenigstens zwei Kautschuken eingesetzt werden.

Besonders gute Ergebnisse lassen sich erzielen, wenn als Kautschuk NBR, EPDM und IIR jeweils alleine oder in einer Kombination aus wenigstens zwei Kautschuken verwendet werden.

Erfindungswesentlich ist es, dass die Kautschukmischung neben dem vorhandenen Kautschuk wenigstens ein Polyvinylchlorid als zusätzliches thermoplastisches Elastomer (TP) enthält. Die Gesamtmenge an PVC beträgt bevorzugt 1 bis 40 phr, besonders bevorzugt 10 bis 40 phr, ganz besonders bevorzugt 20 bis 40 phr.

In einer bevorzugten Ausführungsform wird eine Kombination aus NBR und PVC (NBR/PVC) verwendet. Eine derartige Kombination bietet neben einer guten Fettbeständigkeit eine gute Ozon- und Alterungsbeständigkeit und eine optimierte Standfestigkeit während der Extrusion.

Zusätzlich kann die Kautschukmischung noch wenigstens ein thermoplastisches Elastomer (TPE) und / oder wenigstens einen weiteren Thermoplasten (TP) enthalten. Bevorzugte TPE und / oder weitere TP sind hierbei: Polyolefin, insbesondere Polyethylen (PE) oder Polypropylen (PP), und / oder Polystyrol und / oder Polyamid (PA), beispielsweise PA6 oder PA6.6, und / oder Polyester (PES).

Erfindungswesentlich ist es, dass die Kautschukmischung mit wenigstens einem para-tert.-Butylphenolformaldehydharz vernetzt Als besonders gut geeignet hat sich die Verwendung mit einem Methylolgehalt von 8 bis 15% und einem bevorzugten Methylolgehalt von 10 bis 14%.

Die Menge des eingesetzten Harzes oder die Gesamtmenge an eingesetzten Harzen, falls mehr als ein Harz verwendet wird, beträgt bevorzugt 0,01 bis 25 phr, besonders bevorzugt 0,1 bis 10 phr und ganz besonders bevorzugt 0,1 bis 5 phr und weiterhin ganz besonders bevorzugt 0,1 bis 3 phr bzw. 0,1 bis 1 phr.

Zur Unterstützung der Harzvernetzung kann die Kautschukmischung noch wenigstens eine Carbonsäure enthalten. Hierbei kann es sich um eine Monocarbonsäure oder um eine Dicarbonsäure oder um ein Gemisch aus Monocarbonsäure und Dicarbonsäure handeln. Monocarbonsäuren sind Säuren, die über eine Carboxylgruppe verfügen.

Bei der Monocarbonsäure kann es sich um eine acyclische aliphatische Monocarbonsäure oder um eine cyclische aliphatische Monocarbonsäure oder um eine aromatische Monocarbonsäure oder um eine heterocyclische Monocarbonsäure handeln. Sie können jeweils gesättigt oder ungesättigt sein.

Beispiele für gesättigte cyclische Monocarbonsäuren sind Cyclobutansäure oder Cyclohexancarbonsäure.

Bevorzugt handelt es sich allerdings um eine gesättigte acyclische aliphatische Monocarbonsäure mit der Formel H(CH)ₘCOOH, wobei m hierbei Werte zwischen 0 und 40, bevorzugt zwischen 8 und 25, annehmen kann. Beispiele für solche gesättigten aliphatische Monocarbonsäuren sind Ameisensäure (m=0), Essigsäure (m=1), Propionsäure (m=2), Buttersäure (m=3), Valeriansäure (m=4), Capronsäure (m=5), Önanthsäure (m=6), Caprylsäure (m=7), Pelargonsäure (m=8), Caprinsäure (m=9), Undecansäure (m=10), Laurinsäure (m=11), Tridecansäure (m=12), Myristinsäure (m=13), Pentadecandisäure (m=14), Palmitinsäure (m=15), Margarinsäure (m=16), Stearinsäure (m=17), Nonadecansäure (m=18), Arachinsäure (m=19), Heneicosansäure (m=20), Behensäure (m=21), Lignocerinsäure (m=22), etc.

Dibasische Säuren sind Carbonsäuren, die über zwei Carboxylgruppen verfügen.

Bei der dibasischen Säure kann es sich um eine acyclische aliphatische dibasische Säure oder um eine cyclische aliphatische dibasische Säure oder um eine aromatische dibasische Säure oder um eine heterocyclische dibasische Säure handeln. Sie können jeweils gesättigt oder ungesättigt sein. Als aromatische dibasische Säuren können bspw. Phthalsäure, Terephthalsäure oder Isophthalsäure verwendet werden.

Bevorzugt handelt es sich allerdings um eine aliphatische dibasische Säure mit der Formel HOOC(CH)ₘCOOH, wobei m hierbei Werte zwischen 0 und 40, bevorzugt zwischen 6 und 22, besonders bevorzugt zwischen 6 und 12, annehmen kann. Beispiele für solche aliphatischen dibasische Säuren sind Oxalsäure (m=0), Malonsäure (m=1), Bernsteinsäure (m=2), Glutarsäure (m=3), Adipinsäure (m=4), Pimelinsäure (m=5), Suberinsäure (m=6), Azelainsäure (m=7), Sebacinsäure (m=8), Undecandisäure (m=9), Dodecandisäure (m=10), Brassylsäure (m=11), Tetradecandisäure (m=12), Thapsiasäure (m=14), Heptadecandisäure (m=15), Octadecandisäure (m=16), Nonadecandisäure (m=17) und Eicosandisäure (m=18), etc.

Alle Carbonsäuren können alleine oder in Kombination verwendet werden.

Besonders gut geeignete Säuren sind Stearinsäure und Benzoesäure.

Weiterhin enthält die Kautschukmischung noch wenigstens einen Füllstoff.

Hierbei kann es sich um alle der fachkundigen Person bekannten Füllstoffe handeln, wie bspw. Ruß, Graphit, Kohlenstoffnanoröhren (CNT), Kieselsäure, Calcium- und Aluminiumsilikate, Kieselgur, Kaolin, Kalkstein, Zeolithe, Cyclodextrine, Feldspat und/oder Talkum Kreide, Tonerde-Gel, Fasern (Kurz- und Langfasern, Glas-, Kohle-, Aramidfasern), Whisker (Aluminiumoxid, Siliziumcarbid), Glimmer, Magnetit, Kern/Mantel-Füllstoffe, Asphalt, Hartgummistaub, Chloride, Carbonate, Sulfate, Oxide und Hydroxide von Alkali- und Erdalkalimetallen, Al(OH)₃, PVC, Polymerpulver (z.B. PE oder PTFE-Pulver), Faktis, anorganische und organische Pigmente, organische oder anorganische Säuren, Glaskugeln, Holzmehl, Nussschalenmehl, handeln, die jeweils alleine oder in Kombination verwendet werden können.

Damit die Kautschukmischung eine gute elektrische Leitfähigkeit aufweist, hat sich besonders die Verwendung von leitfähigen Rußen, Graphit, CNT und Metallen und deren Verbindungen, insbesondere Eisenverbindungen, als bevorzugt erwiesen.

In einer bevorzugten Ausführungsform enthält die Kautschukmischung noch weitere Zusatzstoffe.

Die weiteren Zusatzstoffe sind ausgewählt aus der Gruppe bestehend aus Verarbeitungshilfsmittel, wie bspw. ZnO, Zn-Stearat, Mg-Stearat, PE- und /oder PTFE-Pulver, und Weichmacher, wie z.B. Weißöle, Ester, Faktis undWachse, und Emulgatoren und Dispersionsmittel und Neutralisierungsmittel und Alterungsschutzmittel und Haftvermittler, wie bspw. DBU oder DBN und deren Salze, und Ozonschutzmittel und Flammschutzmittel und funktionelle Materialien, wie z.B. antimikrobielle Zusätze, Geruchsneutralisationsmittel, Aromen, und Gleit- und Formtrennmittel und Schutzmitttel gegen Fäulnis und permeationshemmende Stoffe, wie bspw. Schichtsilikate. Die genannten Zusatzstoffe können jeweils alleine oder in Kombination vorhanden sein.

Die erfindungsgemäße Kautschukmischung wird bevorzugt in technischen Kautschukartikeln, wie bspw. Luftfedern, Gummi-Feder-Elemente, Antriebsriemen, Transportbänder, Fördergurte, Schläuche, Reifen, Dichtungsmaterialien, mehrschichtige Stoffbahnen zur Bildung von flexiblen Behältern, Zelten, Planen, Membranen, Schutzanzügen, Drucktüchern oder Faltenbälgen eingesetzt.

Bei Schläuchen handelt es bevorzugt um Zapfschläuche, Krümmerschläuche, Kraftstoffschläuche, Offshore- und Marineschläuche, Bunkerschläuche, Klimaschläuche und Farbspritzschläuche, beheizbare Schläuche oder permeationsarme Schläuche. Aufgrund der geringen Toxizität der Kautschukmischung, die eine Anwendung im Lebensmittel- und Trinkwasserbereich ermöglicht, wird die Kautschukmischung bevorzugt in Trinkwasserschläuchen und Lebensmittelschläuchen verwendet.

Die Kautschukmischung kann ebenso in Abdeckfolien, Planen, oder Auskleidungen für den Direktkontakt mit Trinkwasser eingesetzt werden. Sie kann aber auch in Förderbändern für den Transport von Lebensmitteln oder im Trinkwasserbereich Verwendung finden.

Die Erfindung soll nun anhand von Vergleichs- und Ausführungsbeispielen, die den verschiedenen Tabellen zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Es wurden folgende para-tert.-Butylphenolformaldehydharze verwendet:
Nr.1 para-tert.-Butylphenolformaldeyhdharz, Methylolgehalt zwischen 8 und 12%
Nr.2 para-tert.-Butylphenolformaldeyhdharz, Methylolgehalt zwischen 8 und 13%
Nr.3 para-tert.-Butylphenolformaldeyhdharz, Methylolgehalt zwischen 10 und 15%

**Tabelle 1**

| **Bestandteile** | **Einheit** | **V1** | **V2** | **E1** | **E2** |
|---|---|---|---|---|---|
| NBR | phr | 100 | 100 | 100 | 100 |
| Phenol-Formaldehydharz Nr. 1 | phr | 5 | 2,5 | 5 | 2,5 |
| PVC | phr | 0 | 0 | 43 | 43 |
| | | | | | |

| **Versuchsergebnisse** | **Einheit** | **V1** | **V2** | **E1** | **E2** |
|---|---|---|---|---|---|
| Härte DIN 53505 | Shore A | 66 | 61 | 88 | 88 |
| Zugfestigkeit DIN 53504 S2 | N/mm² | 23 | 14 | 22 | 19 |
| Bruchdehnung DIN 53504 S2 | % | 566 | 704 | 351 | 373 |
| Druckverformungsrest, 25% Verf., 100°C DIN ISO 815 | % | 33 | 57 | 49 | 63 |
| Weiterreißwiderstand DIN ISO 34-1A | N/mm | 13 | 22 | 9 | 12 |
| Abrieb DIN ISO 4649 Verf. A | mm³ | 103 | 103 | 128 | 129 |

**Tabelle 2**

| **Bestandteile** | **Einheit** | **V3** | **V4** | **V5** | **E3** | **E4** | **E5** |
|---|---|---|---|---|---|---|---|
| NBR | phr | 100 | 100 | 100 | 100 | 100 | 100 |
| Phenol-Formaldehydharz Nr. 2 | phr | 5 | 0 | 0 | 5 | 0 | 0 |
| Phenol-Formaldehydharz Nr. 1 | phr | 0 | 5 | 0 | 0 | 5 | 0 |
| Phenol-Formaldehydharz Nr. 3 | phr | 0 | 0 | 5 | 0 | 0 | 5 |
| PVC | phr | 0 | 0 | 0 | 43 | 43 | 43 |
| | | | | | | | |

| **Versuchsergebnisse** | **Einheit** | **V3** | **V4** | **V5** | **E3** | **E4** | **E5** |
|---|---|---|---|---|---|---|---|
| Härte DIN 53505 | Shore A | 63 | 64 | 64 | 87 | 86 | 88 |
| Zugfestigkeit DIN 53504 S2 | N/mm² | 21 | 23 | 22 | 21 | 22 | 21 |
| Bruchdehnung DIN 53504 S2 | % | 651 | 567 | 578 | 357 | 350 | 330 |
| Druckverformungsrest, 25% Verf., 100°C DIN ISO 815 | % | 44 | 33 | 36 | 49 | 48 | 53 |
| Weiterreißwiderstand DIN ISO 34-1A | N/mm | 22 | 22 | 19 | 9 | 10 | 10 |
| Abrieb DIN ISO 4649 Verf. A | mm³ | 105 | 105 | 104 | 125 | 123 | 130 |

## Patentansprüche

1. Kautschukmischung, **dadurch gekennzeichnet, dass** sie wenigstens einen Kautschuk und wenigstens ein Harz als Vernetzungsmittel und Polyvinylchlorid enthält, wobei das Harz ein para-tert.-Butylphenolformaldehydharz ist.

2. Kautschukmischung nach Anspruch 1, **dadurch gekennzeichnet, dass** der Kautschuk Nitrilkautschuk (NBR) ist.

3. Kautschukmischung nach Anspruch 1 oder 2, **dadurch gekennzeichnet, dass** der Füllstoff Kieselsäure und / oder Ruß ist.

4. Kautschukmischung nach einem der Ansprüche 1 bis 3 zur Herstellung einer Abdeckfolie, einer Plane, einer Auskleidung, eines Förderbands, eines Schlauchs oder einer Dichtung.

## Claims

1. Rubber mixture, **characterized in that** it contains at least one rubber and at least one resin as a crosslinking agent and polyvinyl chloride, wherein the resin is a para-tert-butylphenol formaldehyde resin.

2. Rubber mixture according to Claim 1, **characterized in that** the rubber is nitrile rubber (NBR).

3. Rubber mixture according to Claim 1 or 2, **characterized in that** the filler is silica and/or carbon black.

4. Rubber mixture according to any of Claims 1 to 3 for producing a cover film, a tarpaulin, a lining, a conveyor belt, a hose or a seal.

## Revendications

1. Mélange de caoutchoucs, **caractérisé en ce qu'il** contient au moins un caoutchouc et au moins une résine en tant qu'agent de réticulation et un poly(chlorure de vinyle), la résine étant une résine de para-tert.-butylphénolformaldéhyde.

2. Mélange de caoutchoucs selon la revendication 1, **caractérisé en ce que** le caoutchouc est un caoutchouc nitrile (NBR).

3. Mélange de caoutchoucs selon la revendication 1 ou 2, **caractérisé en ce que** la charge est la silice et/ou le noir de carbone.

4. Mélange de caoutchoucs selon l'une des revendications 1 à 3 pour la fabrication d'une feuille de protection, d'une bâche, d'un chemisage, d'une bande transporteuse, d'un tuyau flexible ou d'une garniture d'étanchéité.
